# EUROPEAN PATENT APPLICATION

(11) **EP 2 194 250 A1**
(43) Date of publication of application: **09.06.2010**
(21) Application number: 08720531.6
(22) Date of filing: 19.03.2008
(51) Int. Cl.: F01N 3/20, B01D 53/94, F01N 3/02, F01N 3/08, F01N 3/24, F01N 3/36, B01D 46/42

(54) **EXHAUST PURIFICATION APPARATUS**

(30) Priority: 04.10.2007 JP 2007260663
(71) Applicant: Hino Motors, Ltd., Hino-shi, Tokyo 191-8660 (JP)
(72) Inventor: TORISAKA, Hisaki, Hino-shi Tokyo 191-8660 (JP); MINAMIKAWA, Jinichi, Hino-shi Tokyo 191-8660 (JP); SANO, Rui, Hino-shi Tokyo 191-8660 (JP)
(74) Representative: Walcher, Armin
(86) International application number: PCT/JP2008/000646
(87) International publication number: WO 2009/044495

(57) **Abstract**

The invention has its object to provide an exhaust emission control device with realized lessening of both particulates and NOₓ which can always ensure high NOₓ reduction ratio irrespective of operation conditions. The exhaust emission control device has a selective reduction catalyst 5 as NOₓ lessening catalyst incorporated in an exhaust pipe 4 and having a property of capable of selectively reacting NOₓ with ammonia even in the presence of oxygen, and a particulate filter 13 arranged upstream of the catalyst. A burner 14 for injection, ignition and combustion of a proper amount of fuel is arranged in front of the particulate filter 13, and an oxidation catalyst 15 is interposed between the particulate filter 13 and the selective reduction catalyst 5 so as to conduct oxidation treatment of unburned HC in exhaust gas 3 and so as to facilitate oxidation reaction of NO in the exhaust gas 3 into NO₂.

## Description

### Technical Field

The present invention relates to an exhaust emission control device.

### Background Art

Conventionally, some diesel engines have selective reduction catalyst incorporated in an exhaust pipe through which exhaust gas flow, said catalyst having a feature of selectively reacting NOₓ with a reducing agent even in the presence of oxygen. A required amount of reducing agent is added upstream of the reduction catalyst and is reacted on the catalyst with NOₓ (nitrogen oxides) in the exhaust gas to thereby lessen a concentration of the discharged NOₓ.

In a field of industrial plant or the like with flue-gas denitration, it has been well known that ammonia (NH₃) is effectively used as reducing agent to depurate NOₓ through reduction. However, for automobiles, safety in carrying ammonia itself during running is difficult to ensure, so that in recent years, use of nontoxic urea water as reducing agent has been researched.

More specifically, when urea water is added to the exhaust gas upstream of the selective reduction catalyst, the urea water is decomposed into ammonia and carbon dioxide gas to thereby favorably depurate NOₓ in the exhaust gas through reduction by ammonia on the catalyst (See, for example, Patent Literature 1).

For exhaust emission control of the diesel engine, mere removal of NOₓ in the exhaust gas is insufficient; particulates (particulate matter) in the exhaust gas must be captured through a particulate filter. This kind of particulate filter employed requires to be timely regenerated by burning off the particulates to prevent increase of exhaust resistance due to clogging.

To this end, it has been conceived to additionally arrange flow-through type oxidation catalyst in front of the particulate filter; with accumulation of the particulates becoming increased, fuel is added to the exhaust gas upstream of the oxidation catalyst to forcibly regenerate the particulate filter.

More specifically, the fuel is added to the exhaust gas upstream of the oxidation catalyst to bring about oxidation reaction of the added fuel (HC) during passing of the added fuel through the oxidation catalyst. The exhaust gas elevated in temperature by heat of the oxidation reaction flows into the particulate filter arranged just behind so that temperature of a catalytic floor of the particulate filter is elevated to burn off the particulates, thereby attaining the regeneration of the particulate filter.

With such particulate filter and the oxidation catalyst in front of the same being arranged upstream of the selective reduction catalyst, the oxidation reaction of the added fuel through the oxidation catalyst can elevate the temperature of the exhaust gas, so that temperature on a catalytic floor of the downstream selective reduction catalyst can be increased to enhance the catalytic activity. Thus, the selective reduction catalyst can be served with high activity even at a temperature range lower than ever before.
[Patent Literature 1] JP 2004-218475A

### Summary of Invention

### Technical Problems

However, when the engine is still in cold state, for example, at startup in a winter morning, the oxidation catalyst in front of the particulate filter is so cool that it takes considerable time for the catalyst to be raised to a lower limit temperature for sufficient catalytic activity of the catalyst. As a result, disadvantageously, fuel addition cannot be performed for a while after the startup and the catalytic floor temperature of the downstream selective reduction catalyst cannot be enhanced to enhance catalytic activity. Thus, at the startup, there may occur a time band where NOₓ cannot be depurated.

Moreover, it is expected that restrictions on depuration of exhaust gas will tend to become severer and severer in future and therefore it is in a situation of not overlooking possible time band where NOₓ cannot be depurated at startup. Thus, it has been demanded to develop an exhaust emission control device which can attain high NOₓ lessening ratio even at startup of an engine.

The invention was made in view of the above and has its object to always ensure high NOₓ lessening ratio irrespective of operational conditions in an exhaust emission control device which has realized lessening of both particulates and NOₓ.

### Solution to Problems

The invention is directed to an exhaust emission control device with an NOₓ lessening catalyst incorporated in an exhaust pipe and a particulate filter arranged upstream of said NOₓ lessening catalyst, characterized by comprising a burner in front of said particulate filter for injecting, igniting and burning a proper amount of fuel and an oxidation catalyst interposed between said particulate filter and said NOₓ lessening catalyst so as to conduct oxidation treatment of unburned HC in exhaust gas and so as to facilitate oxidation reaction of NO in the exhaust gas into NO₂.

Thus, in this manner, particulates in the exhaust gas are captured by the particulate filter and NOₓ in the exhaust gas is lessened in the NOₓ lessening catalyst downstream through reduction reaction or absorption reaction, so that both particulates and NOₓ in the exhaust gas are lessened.

Moreover, even if the operation state is such that NOₓ lessening catalyst does not reach a lower limit temperature of activity, for example, at startup of the engine where the engine is still in a cold state, a proper amount of fuel may be injected, ignited and burned by the burner upstream of the NOₓ lessening catalyst, so that the exhaust gas elevated in temperature by the combustion is introduced into the NOₓ lessening catalyst and the catalytic floor temperature thereof is forcibly raised to a temperature required for the reaction. As a result, the NOₓ lessening catalyst is activated irrespective of the current operational conditions, thereby attaining favorable lessening of NOₓ.

In this case, even if the unburned HC produced due to the burner passes through the particulate filter, such unburned HC undergoes oxidizing treatment through the oxidation catalyst before it reaches the NOₓ lessening catalyst; thus, prevented are poisoning of the NOₓ lessening catalyst by the unburned HC and generation of white fumes in the exhaust discharged outside of the vehicle.

Moreover, part of NO in the exhaust gas is oxidized during its passing through the oxidation catalyst into highly reactive NO₂; increase in ratio of such highly reactive NO₂ will facilitate NOₓ lessening reaction in the NOₓ lessening catalyst to favorably lessen NOₓ.

Furthermore, by the ignition and combustion by the burner, the particulate filter arranged just behind can be elevated in temperature efficiently in a short time. Forced regeneration of the particulate filter can be arbitrarily conducted at any required timing irrespective of current operating conditions and can be completed in a time shorter than ever before.

Upon specifically conducting the invention, the NOₓ lessening catalyst used may be selective reduction catalyst or NOₓ absorption reduction catalyst. When the NOₓ lessening catalyst is selective reduction catalyst, NO in the exhaust gas is partly oxidized through its passing through the oxidation catalyst into highly reactive NO₂. Increase in ratio of such highly reactive NO₂ facilitates reduction reaction with high reaction velocity to thereby attain favorable lessening of NOₓ.

When the NOₓ lessening catalyst is NOₓ absorption reduction catalyst, NO in the exhaust gas is partly oxidized through its passing through the oxidation catalyst into highly reactive NO₂. Increase in ratio of such highly reactive NO₂ facilitates absorption reaction with high reaction velocity to thereby attain favorable lessening of NOₓ.

### Advantageous Effects of Invention

According to an exhaust emission control device of the invention as mentioned in the above, various effects and advantages can be obtained as mentioned in the below.

(I) Even in operational conditions where the NOₓ lessening catalyst does not reach a lower limit temperature of activity, the ignition and the combustion by the burner can forcibly elevate the catalytic floor temperature of the NOₓ lessening catalyst to a temperature required for the reaction, so that the NOₓ lessening catalyst is made active irrespective of current operational conditions to always ensure high NOₓ reduction ratio. Moreover, unburned HC produced due to the burner can undergo oxidation treatment before it reaches the NOₓ lessening catalyst, so that prevented are poisoning of NOₓ lessening catalyst by the unburned HC and production of white fumes. Moreover, No in the exhaust gas may be partly oxidized through the oxidation catalyst to increase the ratio of highly reactive NO₂, so that NOₓ lessening reaction through NOₓ lessening catalyst can be facilitated to improve NOₓ lessening ratio.

(II) By ignition and the combustion by the burner, the particulate filter arranged just behind can be effectively elevated in temperature in a short time, so that forced regeneration of the particulate filter can be made at any required timing and irrespective of current operational conditions and the forced regeneration can be completed in a time shorter than ever before.

### Brief Description of Drawings

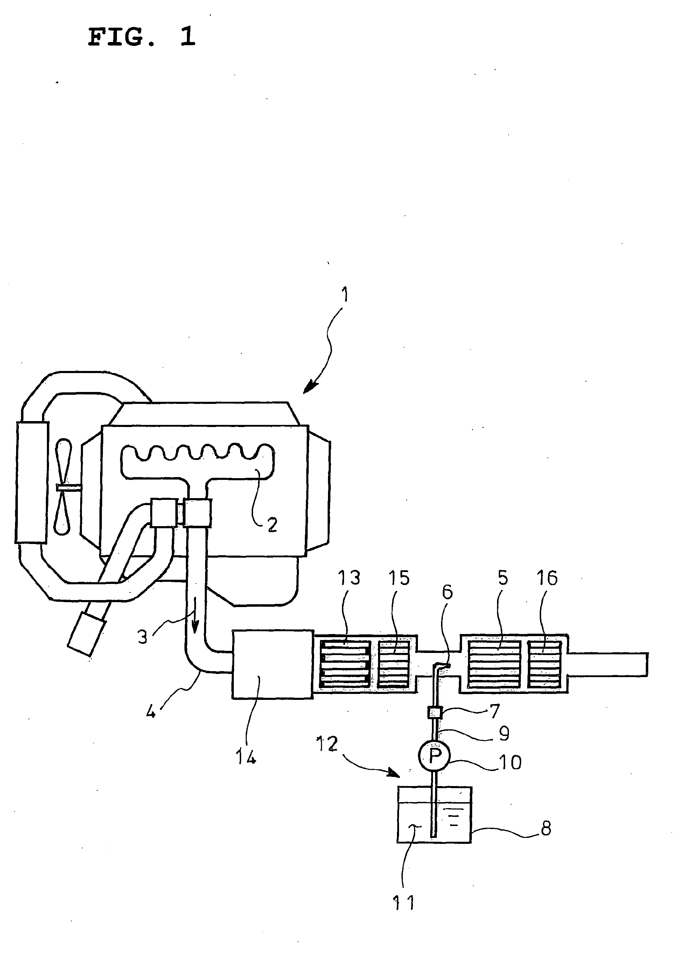

Fig. 1 is a schematic view showing an embodiment of the invention.

### Reference Signs List

- 3: exhaust gas
- 4: exhaust pipe
- 5: selective reduction catalyst (NOₓ lessening catalyst)
- 13: particulate filter
- 14: burner
- 15: oxidation catalyst

### Description of Embodiment

An embodiment of the invention will be described in conjunction with the drawing.
Fig. 1 shows the embodiment of the invention. In an exhaust emission control device of the embodiment, incorporated in an exhaust pipe 4 through which exhaust gas 3 flows from a diesel engine 1 via an exhaust manifold 2 is a selective reduction catalyst 5 (NOₓ lessening catalyst) having a property capable of selectively reacting NOₓ with ammonia even in the presence of oxygen.

Arranged on an entry side of the selective reduction catalyst 5 is an injection nozzle 6 which is connected with a urea water tank 8 arranged at a proper position through urea water supply line 9 with urea water injection valve 7. A supply pump 10 incorporated in the urea water supply line 9 is driven to add urea water 11 (reducing agent) in the urea water tank 8 through urea water injection valve 7 to upstream of the selective reduction catalyst 5. Such urea water injection valve 7, urea water tank 8, urea water supply line 9 and supply pump 10 provides the urea water addition device 12.

A particulate filter 13 which captures particles from the exhaust gas 3 for disposal is incorporated in the exhaust pipe 4 upstream of an added position of urea water 11 (opening position of the injection nozzle 6) by the urea water addition device 12. Arranged in front of the particulate filter 13 is a burner 14 for injecting a proper amount of fuel for ignition and combustion. The burner 14 is provided with a fuel injection nozzle (not shown) through which a proper amount of fuel is injected, and an ignition plug (not shown) for igniting the fuel injected through the injection port.

Interposed between the particulate filter 13 and the selective reduction catalyst 5 and upstream of the added position of urea water 11 (opened position of the injection nozzle 6) is an oxidation catalyst 15 so as to conduct oxidizing treatment of the unburned HC in the exhaust gas 3 and so as to facilitate oxidation reaction of NO in the exhaust gas 3 into NO₂.

In the embodiment illustrated, arranged just behind the selective reduction catalyst 5 is an NH₃ slip catalyst 16 which brings about oxidation treatment of surplus ammonia for prevention of ammonia from leaking.

With the exhaust emission control device thus constructed, the particulates in the exhaust gas 3 are captured by the particulate filter 13, and downstream thereof the urea water 11 is added to the exhaust gas 3 by the injection nozzle 6 in the urea water addition device 12 and is decomposed into ammonia and carbon dioxide gas; NOₓ in the exhaust gas 3 is favorably reduced and depurated on the selective reduction catalyst 5 by ammonia, so that both the particulate and NOₓ in the exhaust gas 3 are lessened.

Moreover, even in operational conditions where the selective reduction catalyst 5 does not reach a lower limit temperature of activity, for example, at startup where the engine 1 is still in cold state, a proper amount of fuel is injected, ignited and burned by the burner 14 upstream of the selective reduction catalyst 5; such combustion causes the high-temperatured exhaust gas 3 to be guided into the selective reduction catalyst 5, so that the catalytic floor temperature thereof is forcibly elevated to a temperature required for the reaction. As a result, selective reduction catalyst 5 can be made active irrespective of current operational conditions to thereby favorably lessen NOₓ.

In this case, even if unburned HC generated due to the burner 14 passes through the particulate filter 13, the unburned HC undergoes oxidizing treatment through the oxidation catalyst 15 before it reaches the selective reduction catalyst 5, so that prevented are poisoning of the selective reduction catalyst 5 by the unburned HC and generation of white fumes in the exhaust discharged outside of the vehicle.

Moreover, NO in the exhaust gas 3 is partly oxidized through its passing through the oxidation catalyst 15 into high reactive NO₂; increase in ratio of such highly reactive NO₂ facilitates reduction reaction with high reaction speed through the selective reduction catalyst 5 to thereby favorably lessen NOₓ.

Specifically, the urea water added to the selective reduction catalyst 5 receives heat in the exhaust gas 3 after the addition and is decomposed into ammonia and carbon dioxide gas in accordance with the following expression

(NH₂)₂CO + H₂O → 2NH₃ + CO₂

so that NOₓ is reduced and depurated by the ammonia. When NO₂ is increased by the oxidation catalyst 15 with respect to NO taking over majority of NOₓ in the exhaust gas 3, the reduction reaction with the highest reaction speed according to the following expression is facilitated

NO + NO₂ + 2NH₃ → 2N₂ + 3H₂O

to thereby favorably lessen NOₓ.

In facilitation of such reduction reaction, it is important to approximate NO/NO₂ ratio in the exhaust gas 3 to about 1-1.3; thus, it is preferable that in order to make NO/NO₂ ratio in the exhaust gas 3 approximate to about 1-1.3 in wide operational areas of the diesel engine 1, an amount of royal metals such as platinum contained in the raw material of the oxidation catalyst 15 is properly adjusted.

If there were no function in the oxidation catalyst 15 to facilitate the oxidation reaction of NO into NO₂, most of NOₓ in the exhaust gas 3 would be taken over by NO, so that NOₓ in the exhaust gas would be reduced and depurated in accordance with the expression

6NO + 4NH₃ → 5N₂ + 6H₂O

of the expression

4NO + 4NH₃ + O₂ → 4N₂ + 6H₂O

Anyway, its reaction velocity would be of course slow in comparison with the case where NO/NO₂ ratio in the exhaust gas 3 is about 1-1.3.

Thus, according to the above embodiment, even in the operational conditions where the selective reduction catalyst 5 does not reach the lower limit temperature of activity, the catalytic floor temperature of the selective reduction catalyst 5 can be elevated through ignition and combustion by the burner 14 to a temperature required for the reaction, so that irrespective of current operational conditions, the selective reduction catalyst 5 is made active to always ensure high NOₓ lessening ratio. Moreover, unburned HC generated due to the burner 14 can undergo oxidizing treatment through the oxidation catalyst 15 before it reaches the selective reduction catalyst 5. As a result, prevented are poisoning of the selective reduction catalyst 5 by the unburned HC and generation of white fumes. Moreover, NO in the exhaust gas 3 can be partly oxidized through the oxidation catalyst 15 to increase ratio of highly reactive NO₂, which facilitates reduction reaction with high reaction speed through the selective reduction catalyst 5 to thereby enhance NOₓ lessening ration.

Since the ignition and combustion by the burner 14 can effectively elevate the temperature of the particulate filter 13 arranged just behind in a short time, forced regeneration of the particulate filter 13 can be arbitrarily conducted at any required timing and irrespective of current operational conditions, and the forced regeneration can be completed in a time shorter than ever before.

In the embodiment mentioned in the above, selective reduction catalyst 5 which has a property capable of selectively reacting NOₓ with ammonia even in the presence of oxygen is used as NOₓ lessening catalyst, the urea water 11 as reducing agent being added upstream of the selective reduction catalyst 5. Alternatively, a selective reduction catalyst which has a property capable of selectively reacting NOₓ with HC even in the presence of oxygen may be employed as NOₓ lessening catalyst, fuel (HC) such as diesel oil as reducing agent being added upstream of the selective reduction catalyst.

Alternatively, NOₓ absorption reduction catalyst, which has a feature of oxidizing NOₓ in the exhaust gas 3 to temporarily absorb the same in the form of nitrate when exhaust air/fuel ratio is lean and discharging and decomposing NOₓ through intervention of unburned HC and CO for reduction and depuration when the concentration of O₂ in the exhaust gas 3 is lowered, may be used as NOₓ lessening catalyst. In this case, NO in the exhaust gas 3 is partly oxidized through its passing through the oxidation catalyst 15 into highly reactive NO₂, increase in ratio of such highly reactive NO₂ facilitating the absorption reaction with high reaction velocity to thereby favorably lessen NOₓ.

It is to be understood that an exhaust emission control device of the invention is not limited to the above embodiment and that various changes and modifications may be made without departing from the scope of the invention.

## Claims

1. An exhaust emission control device with an NOₓ lessening catalyst incorporated in an exhaust pipe and a particulate filter arranged upstream of said NOₓ lessening catalyst, comprising a burner in front of said particulate filter for injecting, igniting and burning a proper amount of fuel and an oxidation catalyst interposed between said particulate filter and said NOₓ lessening catalyst so as to conduct oxidation treatment of unburned HC in exhaust gas and so as to facilitate oxidation reaction of NO in the exhaust gas into NO₂.

2. An exhaust emission control device as claimed in claim 1, wherein the NOₓ lessening catalyst is selective reduction catalyst or NOₓ absorption reduction catalyst.
